# EUROPEAN PATENT APPLICATION

(11) **EP 1 482 400 A1**
(43) Date of publication of application: **01.12.2004**
(21) Application number: 03012082.8
(22) Date of filing: 28.05.2003
(51) Int. Cl.: G06F 3/033

(54) **Input device**

(71) Applicant: SIEMENS AKTIENGESELLSCHAFT, 80333 München (DE)
(72) Inventor: Hoeyer, Michael, 9200 Aalborg SV (DK); Cruz, Carmen Santa, 9000 Aalborg (DK)

(57) **Abstract**

An input device (100) comprises an inner wall (105) and an outer wall (120); a first set of pressure-sensitive elements (130) arranged between the inner and outer walls (105, 120), at least one of the pressure-sensitive elements (130) comprising material changing an electromagnetic property in response to a pressure applied on it; means (P, 501, 502, 503) for measuring a change in the electromagnetic property; and means (503) for generating a logical value if the change is larger than a predefined threshhold value.

## Description

Different services and applications implemented for portable electronic devices have been under massive development work during last decades. Together with the new technical capabilities offered by such devices, this evolution has led to new user needs especially for Portable Digital Assistants PDAs and mobile terminals.

Modern input devices normally receive user input via a touch screen, different keys or combinations thereof, or by a joystick. For an ordinary computer, a mouse is commonly used, and a typical laptop comprises a "track pad" as an input device. None of these solutions apts well enough for three dimensional (3D) input purposes, i.e. for an input including diagonal and/or lateral position information together with vertical position information.

It is an object of this invention to bring about a novel input device suitable for use also in portable electronic devices, and a portable electronic device including the same.

An advantage of the input device according to the present invention is the relative mechanical simplicity of the device, bringing out a new and reliable constructional design. According to one aspect of the invention, a user will be enabled to give input using one hand only, or even with one finger. This can be achieved by using an input device or a portable electronic device as described in any one of the independent patent claims.

Dependent claims relate to different advantageous embodiments of the invention.

If the input device comprises a pressure-sensitive element, an electromagnetic property of which changes in response to pressure applied on the pressure-sensitive element, the number of moving components can be reduced, thereby improving the reliability of the device and its resistance against external shocks.

The input device may comprise a plurality of such pressure-sensitive elements, thereby enabling the giving of advanced user input. The accuracy in which directions can be input can be enhanced, and with help of a pressure-sensitive element under the bottom wall of the input device, even 3D input can be given.

The input device can be made at least partially removable. This is particularly useful when the portable electronic apparatus is intended for being connectable with or assembled into a removable housing, because then the input device can at least partly be integrated into the removable housing.

In the following, the invention and its preferred embodiments are described in more detail with reference to the examples shown in appended drawings, of which:
- Figure 1A: is a top view of the input device;
- Figure 1B: is a top view of the input device showing ist mechanical construction in more detail;

- Figure 2A: is a 3D view of the input device showing a measurement pressure-sensitive element for input in Z-direction;
- Figure 2B: illustrates the protruding rims 105B, 105C on the inner wall 105;
- Figure 2C: shows a cross-sectional cut of the inner and bottom walls and the Z-directional pressure-sensitive element located between them;
- Figure 3A: and 3B show how the input device can be used for lateral user input;
- Figure 4: shows two data structures for obtaining user input from the pressure-sensitive elements;
- Figure 5: illustrates how the output of the pressure-sensitive elements can be collected;
- Figure 6: shows a portable electronic device including a 3D input device;
- Figure 7: is a sectional cross-cut of the portable electronic device 6 a part of the input device removed; and
- Figure 8: shows the removable part of the input device, integrated in a removable housing of a portable electronic device.

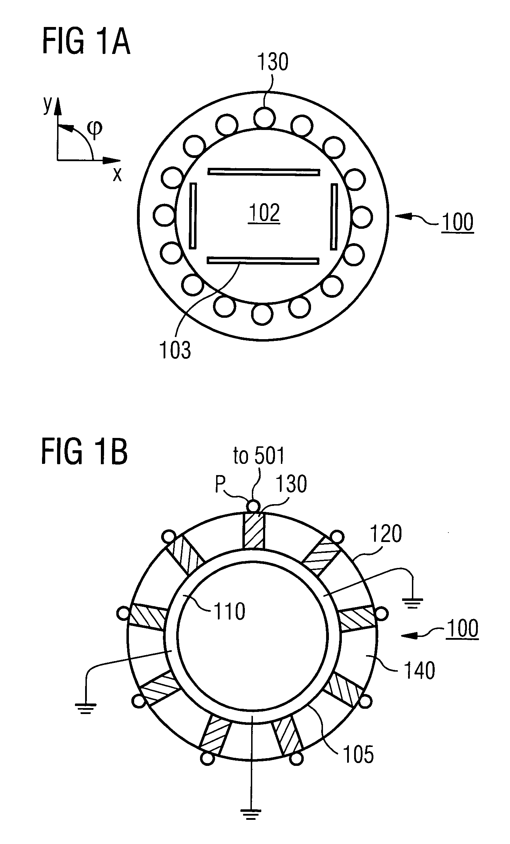

Figure 1A shows a top view of the input device 100. The input device comprises pressure-sensitive elements 130 for receiving input in diagonal or lateral direction i.e. in XY-plane. The pressure-sensitive elements 130 are arranged in a symmetric manner around a flat area 102 in the middle. The flat area 102 may be roughened, or of material having a reasonably large (≥ 0.40) coefficient of friction in order to enable a good grip for the user's finger. Further, the flat area 102 may be surrounded by rims 103 which can be arranged either in the direction of X and/or Y -axes, or in a deliberate direction, for increasing the firmness of the grip.

Figure 1B is a top view of the input device showing the construction in more detail. Under the flat area 102 a grounded ring 110 of conductive material, such as copper or any other metal, is provided. The ring 110 may be grounded from multiple positions. The grounding is used to give a uniform electrical potential in the ring. The working priciple of the input device is that whenever the inner wall 105 is moved to any direction in the XY plane, it exerts pressure on the pressure-sensitive element 130 because of the forces between itself and the outer wall 120. The pressure-sensitive element 130 at least partially consists of such a material that changes its electromagnetic property in resonse to pressure. Examples of such materials are piezoelectric materials and piezoresistive materials. The former responds to pressure by showing voltage accross the pressure-sensitive element, the latter responds to pressure by showing resistance accross the pressure-sensitive element. It may be possible to use magnetostrictive material as well for the pressure-sensitive element but at the moment the accurate detection of magnetic fields is rather complicated and requires more expensive tools.

In the present example, the grounding is made within the inner wall. Therefore, the input device 100 has a ground connector for grounding it with the portable electronic device to which it will be electrically connected. The grounding can be made to the outer wall as well; then the grounding can be implemented wholly into the portable electronic device, but measurement leads to outside of the input device 100 will be provided.

A pressure-sensitive element 130 can have a strip- or rod-like shape, rectangular shape, a cubic form, or it can also have an annular form. In the latter case it would be sufficient to have only one pressure-sensitive element 130 which could, for example, be located between the inner wall 105 and the outer wall 120.

Each of the pressure-sensitive elements 130 includes a measurement point P where the change in the electromagnetic property is measured. If the pressure-sensitive element 130 is of piezoelectric material, then the voltage over the pressure-sensitive element 130 is measured at point P. If the pressure-sensitive element 130 is of piezoresistive material, then the resistance over the pressure-sensitive element 130 is measured at point P. For the measurements, devices currently on the market can be used without any difficulty.

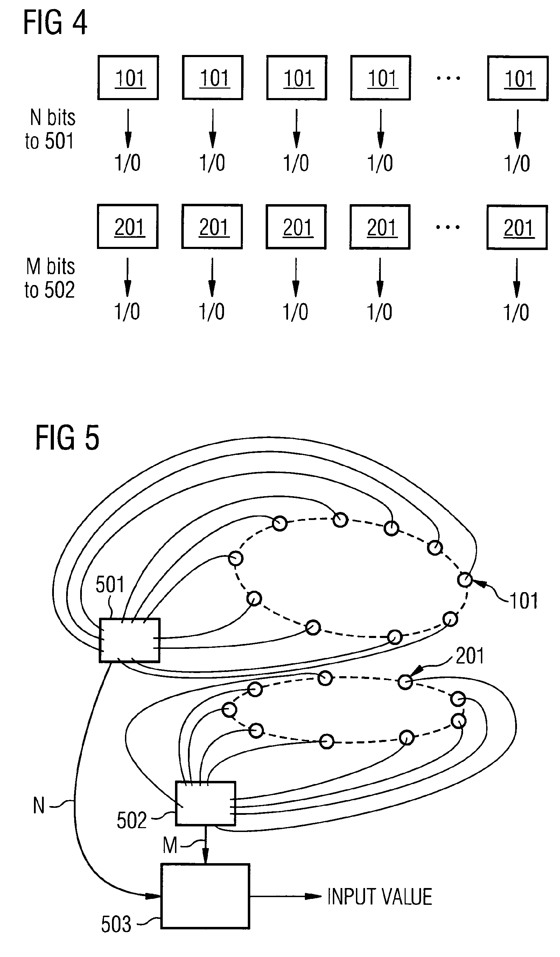

It is particularly advantageous to use piezoelectric material because then the point P can be directly connected to a analog-to-digital converter which may be in a multiplexer 501. This will be described in more detail with reference to Figure 5.

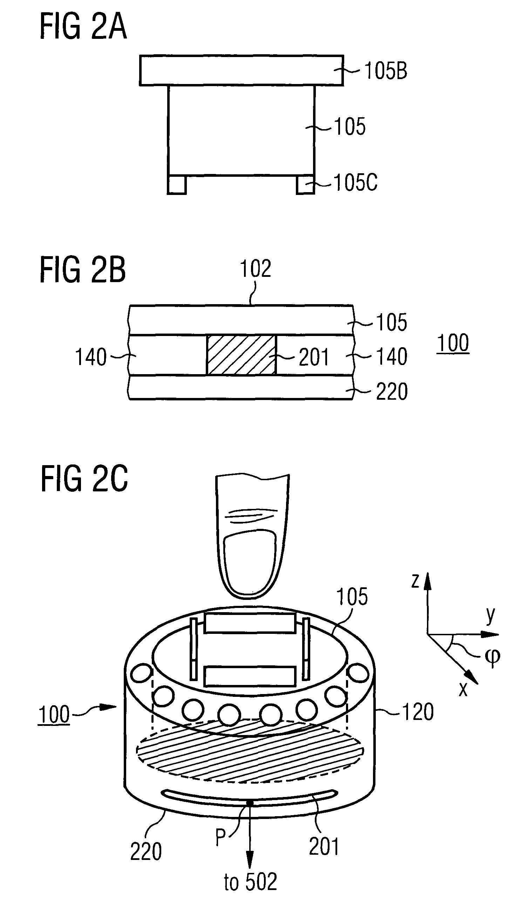

Figure 2A is a 3D view of the input device. Now also a pressure-sensitive element 201 for the measurement of vertical input (input in Z-direction) is visible. Instead of having only one pressure-sensitive element 201 for the measurement of vertical input, also multiple pressure-sensitive elements can be used. In the following example the invention will be described with one pressure-sensitive element only, but it would be highly analogous to implement the input device with more pressure-sensitive elements for the measurement of vertical input as well. Then the input device 100 can be used for measuring tilting as well. In this use case, the differences in the effect on single pressure-sensitive elements caused by pressure difference can be measured, and in response to the measurement, a tilting signal can be produced. For example, if the pressure on the left hand side of the flat area 102 in the middle is larger than on the right hand side, then the pressure exerted on the bottom pressure-sensitive element on the left is more than the pressure exerted on the bottom pressure-sensitive element on the right hand side. Then the effect of the pressure, such as voltage or resistance, will be different and thereby detectable.

The pressure-sensitive element 201 is located between the inner wall 105 and the bottom wall 220. When the input device 100 is pressed downwards, the inner wall 105 exerts pressure on the pressure-sensitive element 201 between itself and the bottom wall 220. If the pressure-sensitive element 201 at least partially consists of piezoelectric or piezoresistive material, the pressure causes a change in an electromagnetic property of the pressure-sensitive element 201. This change can be detected, as already explained in the context of Figure 1B.

In order to increase the pressure exerted on the pressure-sensitive elements 130, 201, protruding rims 105B and/or 105C can be implemented on the inner wall 105. A cross-sectional cut of the inner wall 105 including rims 105 is shown in Figure 2B. The rims 105B, 105C need not be annular, but they can also have a shape of a spike or rod. Then if there are multiple pressure-sensitive elements 130 and/or 201, the rims 105B, 105C would have a gearwheel shape, where the teeth would be in touch with the pressure-sensitive elements 130, 201.

The area between the pressure-sensitive elements 130, inner wall 105 and outer wall 120 can be filled with an elastic material 140, such as rubber. In response to deviating the flat plate 102 from its original position, the elastic material 140 is compressed, so that there emerges a counterforce. This can be achieved by selecting the size of the pressure-sensitive elements 130 suitably. It is also possible to have string-like returning elements built inside the elastic material 140, or to use the string-like returning elements alone without the elastic material 140. The form of the elastic material 140 fits preferably very well to the shape of the pressure-sensitive elements 130, so that it will provide a shielding against dust and moisture as well.

Figure 2C shows a cross-sectional cut of the inner and bottom walls and the Z-directional pressure-sensitive element located between them. The pressure-sensitive element 201 is located on the bottom wall 220. The inner wall 105 having the flat area 102 on top rests on the pressure-sensitive element 201. Around the pressure-sensitive element 201 there can be some elastic material 140 in the manner described above.

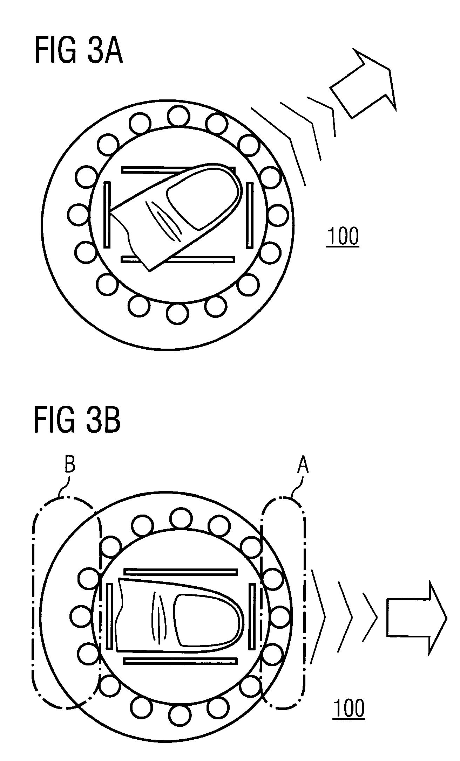

Figures 3A and 3B show how the input device can be used for obtaining horizontal user input. In Figure 3A, the user slides the surface 102 to the direction of i+j (directions as defined in Figure 1A, i is a unit vector in X-direction, j is a unit vector in Y-direction), whereas in Figure 3B the direction of input is i. The magnitude of the input can depend on the stress caused on the pressure-sensitive elements 130 instead of having only an ON/OFF type input. Because there are a plurality of pressure-sensitive elements 130, the direction of the input can be identified with a relatively good precision.

Figure 4 shows two data structures for obtaining user input by using the pressure-sensitive elements. Each pressure-sensitive element 130 and 201 can produce a logical value. If there are N pressure-sensitive elements 130, there are thus N bits giving information on lateral position. If there are M pressure-sensitive elements 201, there are thus M bits giving information on vertical position.

The pressure-sensitive elements 130 giving actual output are marked in Figure 3B with letter A. The pressure-sensitive elements 130 marked with letter B can be used for giving output as well, such as a negative value. This is by no means necessary but can be used to improve the reliability of the input device 100.

Depending on the structure of pressure-sensitive elements 130 involved, even more input values showing deviation from the rest position can be obtained. For example, each pressure-sensitive element 130 can obtain four or eight different values.

Figure 5 illustrates how the pressure-sensitive element outputs are collected. Each pressure-sensitive element 130 output is lead in a wire to a multiplexer 501. In a similar manner, each pressure-sensitive element 201 output is lead in a wire to another multiplexer 502. The multiplexers collect the N and M bit information to a processor 503. The multiplexer 501, 502, or also analog-to-digital converter, is used for generating a logical value if the change is larger than a predefined threshhold value. The input of one pressure-sensitive element 130, 201 can be converted to a single bit (i.e. a logical value) or to a binary number containing multiple bits. The value of the binary number can then correspond to the magnitude of input. The multiplexing characteristics of the multiplexer means that the input of several pressure-sensitive elements 130, 201 can be lead to one multiplexer 501, 502, and it outputs for example only one binary number. This binary number contains then information about the output of each pressure-sensitive element 130, 201 fed to the multiplexer 501, 502.

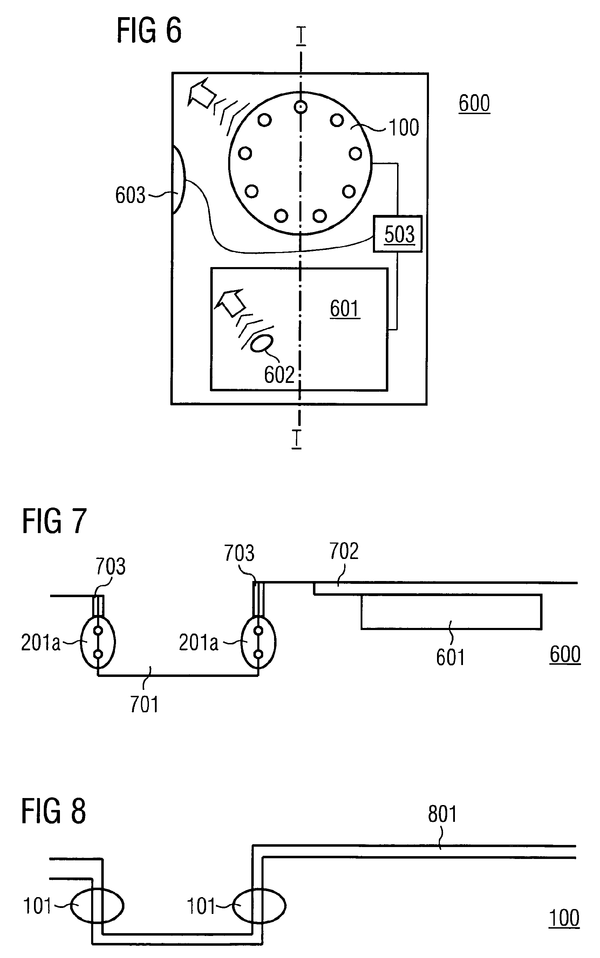

Figure 6 shows a portable electronic device including a 3D input device 100. The input device 100 is integrated in the removable housing of the portable electronic device. The input device 100 is electrically connected to a processor 503 of the portable electronic device 600 in the manner described above. Also a display 601 is connected to the processor 503. When the user moves his/her finger on the flat plate 102 slighly displacing it from its rest position, a pointer 602 on the display 601 can move in the same direction. When the cursor on the screen is then in the right position, the user presses an actuator 603, such as a microswitch. The actuator 603 is also connected to the processor 503.

Figure 7 is a sectional cross-cut of the portable electronic device 600, when the removable housing incorporating a part of the input device has been removed. The display 601 is sealed and covered with a display cover 702. The portable electronic device 600 includes then a recess 701 for accommodating the input device 100. In the recess 701 there are accommodation means 201a for pressure-sensitive elements 130 and 201. Sealing 703 surrounds the recess 701 for providing extra protection against dust and moisture.

Figure 8 shows the removable part of the input device 100, integrated in a removable housing 801 of the portable electronic device. The removable housing 801 has a form suitable for fitting into the recess 701.

The dimensioning of the pressure-sensitive elements 130, 201 can be done using common knowledge of materials. If piezoelectric or piezoresistive materials are selected, a good reference is "Piezoelectric and Piezoresistive Sensors", at the date of filing (May 28, 2003) available in the Internet at *http:*//*class.et.byu.edu*/*eit444*/*HandoutNotes*/*Piezoelectric%20a nd%20PiezoSensors.pdf.* Preferred materials for the pressure-sensitive elements 130, 201 include quartz, tourmaline, or some ceramic materials mentioned in the above cited reference. The details of requirements set for the processor 503 and multiplexer 502 depend on the materials selected. For piezoelectric materials, the practical dimensioning and exerted force would cause voltages of a couple of µV to 100 mV.

Other possible materials for the pressure-sensitive elements 130, 201 include some electroactive polymers. Details of these can be found at *http:*//*techreports.larc.nasa.gov*/*icase*/*2001*/*icase-2001-43.pdf,* and *http:*//*ndeaa.jpl.nasa.gov*/*ndeaa-pub*/*SPIE-2001*/*Paper-SPIE-4329-43-Testing.pdf,* both being available in the Internet at the date of filing.

Although the invention was described above with reference to the examples shown in the appended drawings, it is obvious that the invention is not limited to these but may be modified by those skilled in the art without difference from the scope and the spirit of the invention.

List of reference numerals used:
- 100: input device
- 130: pressure-sensitive element for horizontal input
- 102: flat area
- 103: rim
- 201: pressure-sensitive element for vertical input
- 201a: accommodation means for pressure-sensitive element 130
- 501,: 502 multiplexer
- 503: processor
- 601: display
- 602: pointer
- 603: actuator
- 701: recess
- 702: display cover
- 703: sealing
- 801: removable housing

## Claims

1. An input device (100) comprising:
- an inner wall (105) and an outer wall (120);
- a first set of pressure-sensitive elements (130) arranged between the inner and outer walls (105, 120), at least one of the pressure-sensitive elements (130) comprising material changing an electromagnetic property in response to a pressure applied on it;
- means (P, 501, 502, 503) for measuring a change in the electromagnetic property; and
- means (503) for generating a logical value if the change is larger than a predefined threshhold value.

2. An input device according to claim 1, further comprising:
- a bottom wall (220);
- a second set of pressure-sensitive elements (201) arranged between the inner wall (105) and the bottom wall (220), the pressure-sensitive elements (201) comprising material changing an electromagnetic property in response to a pressure applied on it; and
- means (P, 502) for measuring a change in the electromagnetic property; and
- means (503) for generating a logical value if the change is larger than a predefined threshhold value.

3. An input device according to claim 2, further comprising:
a protruding member (105C) between the inner wall (105) and bottom wall (220) through which the pressure on the pressure sensive elemtent (201) between the inner wall (105) and bottom wall (105) is exerted.

4. An input device according to claim 1, 2, or 3, further comprising: elastic material (140) between the inner wall (105) and outer wall (120), or between the inner wall (105) and the bottom wall (220).

5. An input device according to any one of claims 1 to 4, wherein: the pressure on a pressure-sensitive element(130) between the inner and outer walls (105, 120) is exerted through a protruding member (105B).

6. An input device according to claim 5, wherein: said protruding member (105B) is attached to the inner wall (105) .

7. An input device according to any one of the preceding claims, wherein: one or more of the pressure-sensitive elements (130, 201) arranged between the inner and outer walls (105, 120) or betwen the inner wall (105) and the bottom wall (220) at least partly consists of piezoelectric material.

8. An input device according to claim 7, further comprising:
a ground plane (110), against which the voltage representing the change in the electromagnetic property is measured.

9. An input device according to any one of the preceding claims, **wherein:** one or more of the pressure-sensitive elements (130, 201) arranged between the inner and outer walls (105, 120) or between the inner wall (105) and the bottom wall (220) at least partly consists of piezoresistive material.

10. An input device according to claim 9, further comprising: a ground plane (110), against which the resistance representing the change in the electromagnetic property is measured.

11. A portable electronic device (6) comprising: an input device (100) according to any one of the preceding claims.
